# EUROPÄISCHE PATENTSCHRIFT

(11) **EP 3 221 659 B1**
(45) Veröffentlichungstag und Bekanntmachung des Hinweises auf die Patenterteilung: **20.03.2019**
(21) Anmeldenummer: 15837174.0
(22) Anmeldetag: 09.11.2015
(51) Int. Cl.: F42B 3/103, F42B 3/12, F42B 3/195, B60R 21/26, F42B 3/198

(54) **ZÜNDKAPSEL FÜR INSASSEN-RÜCKHALTESYSTEME**
IGNITION CAPSULE FOR OCCUPANT RESTRAINT SYSTEMS
DÉTONATEUR POUR SYSTÈMES DE RETENUE D'OCCUPANTS DE VÉHICULES

(30) Priorität: 17.11.2014 DE 102014016923; 03.11.2015 DE 102015014124
(43) Veröffentlichungstag der Anmeldung: 27.09.2017
(73) Patentinhaber: EMS-PATVAG s.v.o., 68333 Brankovice (CZ)
(72) Erfinder: DÜRSCHINGER, Günter, 90768 Fürth (DE); DÜRSCHINGER, Elisabeth, 90768 Fürth (DE)
(74) Vertreter: Pfenning, Meinig & Partner mbB
(86) Internationale Anmeldenummer: PCT/DE2015/000544
(87) Internationale Veröffentlichungsnummer: WO 2016/078634

(56) Entgegenhaltungen:
- EP-A1- 2 157 399
- CH-A- 455 691
- DE-A1- 3 447 088
- US-A1- 2004 112 239
- US-A1- 2005 115 434

## Beschreibung

Die Erfindung betrifft eine Zündkapsel für den Gasgenerator eines Insassen-Rückhaltesystems in einem Kraftfahrzeug.

Zu den am häufigsten eingesetzten Insassen-Rückhaltesystemen gehören das aufblasbare Aufprallschutzkissen (Airbag) und der Gurtstraffer. Beide Rückhaltesysteme benötigen einen Gasgenerator, dessen Treibladung im Falle einer Fahrzeugkollision von einer Zündkapsel zur Explosion gebracht wird. Die hierdurch freigesetzte Gasmenge bläst den Airbag auf bzw. versetzt das Turbinenrad des Gurtstraffers in Rotation. Zündkapseln für Airbag-Gasgeneratoren sind nach dem Stand der Technik bekannt.

In der DE 10 2007 001 640 A1, DE 10 2006 056 077 A1, DE 199 61 134 C1, DE 198 36 280 C1, DE 44 29 175 A1, DE 198 36 278 A1, DE 103 26 253 B3, DE 10 2007 031 690 B4, EP 1 541 958 A1, EP 0 705 740 B1, EP 1 716 385 B1, EP 2 351 980 A1 und EP 2 157 399 A1 sind Zündkapseln beschrieben, wobei die gasdichte Verbindung zwischen dem Bodenstück und dem Gehäuse mit der Zündmittelkammer mittels umlaufender Schweißnaht oder Formschluss erfolgt.

Ein gravierender Nachteil ist darin zu sehen, dass bei Verwendung eines aggressiven Zündmittels und dem extrem hohen Innendruck in der Zündmittelkammer, der bei der Detonation entsteht, die Gefahr besteht, dass eine Verformung der Wandung oder Bodenreißer auftreten können. (Bonfire Test)

Die konstruktiven Weiterbildungen zur Verhinderung einer Relativbewegung des Glaspfropfens bzw. zur Verhinderung des Austritts des Kontaktstiftes aus dem Glaspfropfen während des Zündvorganges sind in der EP 1 455 160 B1 ausführlich beschrieben.

In der AT 513505 B1 sind Merkmale offenbart, wobei die Auspresskraft des Glaswerkstoffes aus dem Grundkörper und die Pinauszugskraft bei erheblicher, schlagartiger Kurzzeitbelastung des Anzünders erhöht werden.

Aus der DE 198 20 757 A1 sind bereits umlaufende ringförmige Vertiefungen im Dichtungsbereich der Kontaktstifte bekannt.

Aus der US 2005/0 115 434 A1 ist eine Zündkapsel 56 bekannt mit einem Grundkörper 44 und einer Hülse 36 wobei die Hülse 36, mit dem Grundkörper 44 mittels konischem Einzug 27 formschlüssig verbunden ist. Eine Bodenfalte mit ausgestanztem Boden und Anschlag ist nicht vorhanden.

In der FR 2 984 253 A1 ist eine Zündkapsel offenbart, wobei das Zündelement in einem Kunststoffsockel eingebettet ist. Eine Schweißverbindung zwischen dem Kunststoffsockel 44 und dem einwandigen Gehäuse 2 ist nicht möglich. Das Feuer beim Zündvorgang trifft direkt auf den Kunststoff. Besondere Merkmale zur Vermeidung einer Verformung der Gehäusewand beim Zündvorgang, beispielsweise eine Armierung, sind nicht erkennbar.

In der WO 2013/118 405 A1 ist eine Zündkapsel offenbart wobei der Zünder 12 mit dem Grundkörper 13 und den Kontaktstiften 14 im Kunstharz eingegossen ist. Die formschlüssige Verbindung zum einwandigen Gehäuse 41erfolgt mittels mechanischer Dauerspannkraft durch Aufweiten im konischen Bereich 45 von d2 auf D1 beim Einpressen. Eine Armierung oder Bodenfalte mit Anschlag ist nicht vorgesehen.

Der Erfindung liegt die Aufgabe zugrunde, eine Zündkapsel für den Gasgenerator eines Insassen-Rückhaltesystems anzugeben bei der das Gehäuse so verstärkt wird um einen extrem hohen Innendruck bei der Zündung problemlos aufzunehmen.

Die Aufgabe wird durch die Merkmale von Anspruch 1 gelöst.

Die Erfindung geht von dem Gedanken aus eine Hülse mit Bodenfalte und Anschlag insbesondere im Tiefziehverfahren herzustellen.

Die kostengünstige Herstellung von Hülsen mit Bodenfalte ist in der Schweizer Patentschrift Nr. 455 691 ausführlich beschrieben.

Eingesetzt werden solche Hülsen mit Bodenfalte zuverlässig in der Munitionsfertigung, insbesondere als Randfeuerpatronen für die Olympische Schnellfeuerpistole für störungsfreie Funktion und Vermeidung von Hülsenklemmern im Patronenlager oder Bodenreißer beim Zündvorgang (Deutsche Offenlegungsschrift 1 578 099).

Aus dieser nahezu 50-jährigen positiven Erfahrung lässt sich die Hülse mit Bodenfalte auf den Airbag-Zünder bedenkenlos übertragen, da die Bodenfalte beim Zündvorgang wie eine Armierung wirkt und dadurch die wichtigste UN Prüfung für Airbags, den Außenbrandtest UN 6 (c), auch"Bonfire Test" genannt, erfüllt werden kann.

Die Erfindung wird im Folgenden anhand von Ausführungsbeispielen näher erläutert:

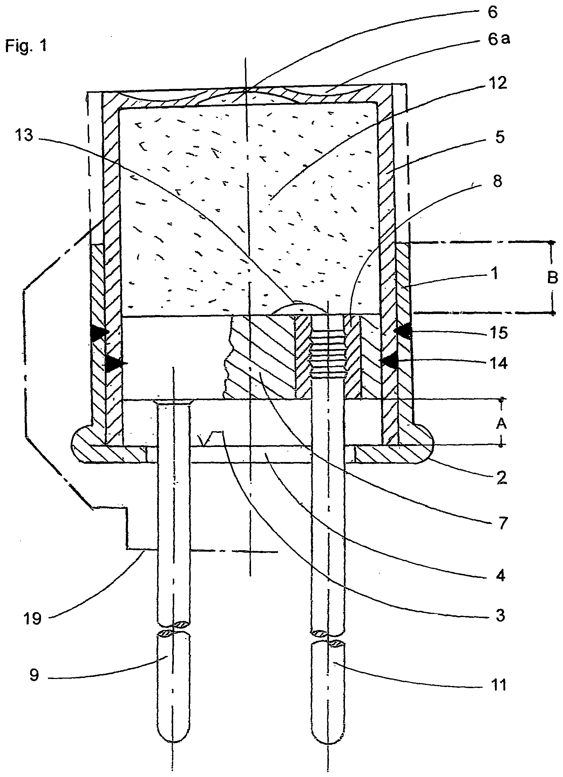

Fig. 1 zeigt schematisch einen Schnitt durch die erfindungsgemäße Zündkapsel. Die Zündkapsel verfügt über eine erste Hülse 1 mit Bodenfalte 2 wobei der Boden der ersten Hülse 1 mindestens einen Durchbruch hat, der kreisrund 4, 4a oder als Langloch 4b ausgebildet ist einer einseitig geschlossenen zweiten Hülse 5 mit Sollbruchstellen 6, 6a einem Grundkörper 7 mit einem angeschweißtem ersten elektrischen Kontaktstift 9 und einem isolierten, in Isoliermaterial 8 eingebetteten zweiten elektrischen Kontaktstift 11, 11a, der mit dem Grundköper 7 mittels Glühdraht 13 fest verbunden ist, wobei der bestückte Grundkörper 7 nach dem Befüllen der zweiten Hülse 5 mit Zündmittel 12 in die zweite Hülse 5 beabstandet A von deren offenem Ende eingesetzt ist und die zweite Hülse 5 gasdicht mit einer umlaufenden ersten Schweißnaht 14 verschlossen ist, wobei die zweite Hülse 5 in die erste Hülse 1 gegen Anschlag 3 eingesetzt ist mit einer umlaufenden zweiten Schweißnaht 15 verbunden ist mit einer Überdeckung B im Detonationsbereich.

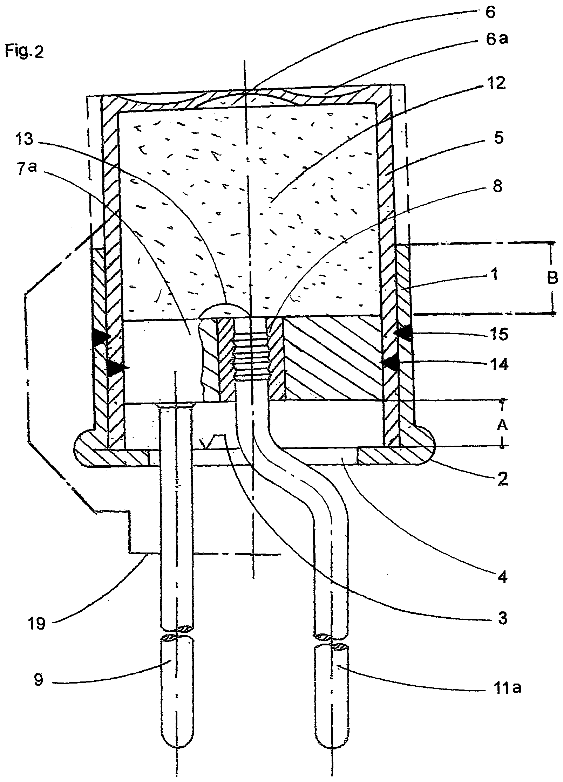

Fig. 2 zeigt schematisch im Schnitt ein Ausführungsbeispiel, wobei der isolierte, in Isoliermaterial 8 eingebettete gekröpfte zweite Kontaktstift 11a im Zentrum des Grundkörpers 7a angebracht ist, bei gleichmäßiger Wanddicke des Grundkörpers 7a.

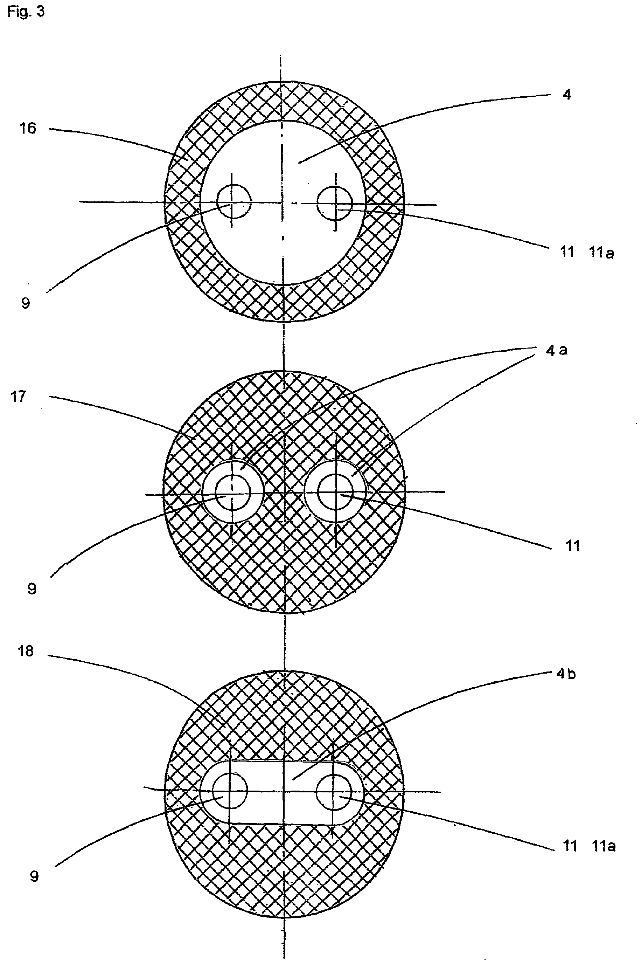

Fig. 3 zeigt schematisch im Schnitt die Zündkapsel mit den 3 Möglichkeiten der verschiedenen Durchbrüche im Boden 4, 4a, 4b und den Kontaktstiften 9 und 11, 11a sowie den Auflageflächen 16, 17, 18.

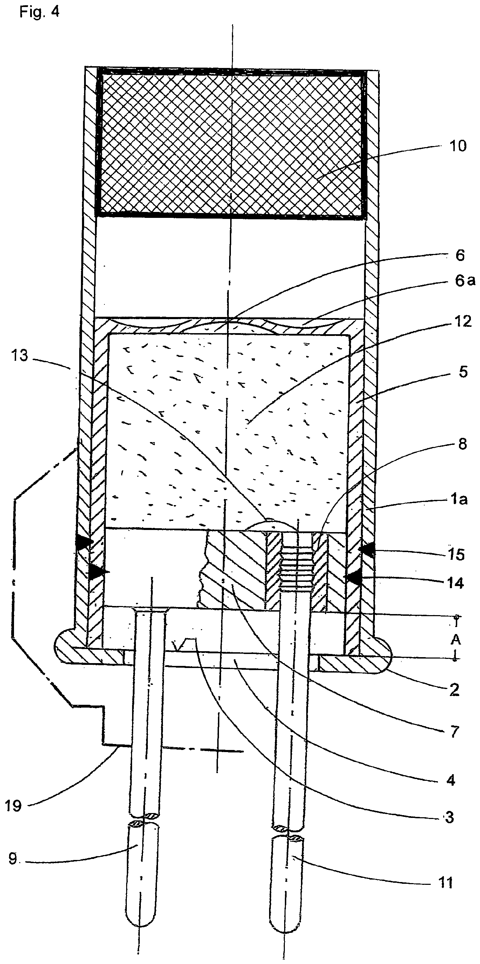

Fig. 4 zeigt schematisch im Schnitt die Zündkapsel mit verlängerter Hülse 1a mit einer Verstärkerladung 10.

## Patentansprüche

1. Zündkapsel für den Gasgenerator eines Insassen-Rückhaltesystems in einem Kraftfahrzeug, mit
einer im Tiefziehverfahren hergestellten ersten Hülse (1) mit einer formschlüssigen Bodenfalte (2), wobei der Boden der ersten Hülse (1) mindestens einen Durchbruch hat der kreisrund (4, 4a) oder als Langloch (4b) ausgebildet ist,
einer einseitig geschlossenen zweiten Hülse (5) mit Sollbruchstellen (6, 6a),
einem Grundkörper (7) mit einem angeschweißten ersten elektrischen Kontaktstift (9) und einem isolierten, in Isoliermaterial (8) eingebetteten zweiten elektrischen Kontaktstift (11, 11a), der mit dem Grundkörper (7) mittels Glühdraht (13) fest verbunden ist,
wobei der bestückte Grundkörper (7) nach dem Befüllen der zweiten Hülse (5) mit Zündmittel (12) in die zweite Hülse (5) beabstandet (A) von deren offenem Ende eingesetzt ist und die zweite Hülse (5) gasdicht mit einer umlaufenden ersten Schweißnaht (14) verschlossen ist, wobei die zweite Hülse (5) in die erste Hülse (1) gegen Anschlag (3) eingesetzt ist und mit der ersten Hülse (1) mit einer umlaufenden zweiten Schweißnaht (15) verbunden ist,
oder der bestückte Grundkörper (7) in die erste Hülse (1) mit Bodenfalte (2) gegen Anschlag (3) eingesetzt ist und mit einer umlaufenden ersten Schweißnaht (14) mit der ersten Hülse (1) verbunden ist,
wobei die erste Hülse (1) nach dem Befüllen mit Zündmittel (12) durch die einseitig geschlossene zweite Hülse (5) mit Sollbruchstellen (6, 6a) mit einer umlaufenden zweiten Schweißnaht (15) hermetisch verschlossen ist, mit einer Überdeckung (B) mindestens im Detonationsbereich.

2. Zündkapsel nach Anspruch 1 **dadurch gekennzeichnet, dass** der zweite Kontaktstift (11a) gekröpft ist und im Zentrum des Grundkörpers (7) angebracht ist.

3. Zündkapsel nach einem der vorherigen Ansprüche **dadurch gekennzeichnet, dass** das Isoliermaterial (8) Glas, Keramik oder Kunststoff ist.

4. Zündkapsel nach einem der vorherigen Ansprüche **dadurch gekennzeichnet, dass** das Zündmittel (12) trockenes, flüssiges oder fließfähiges Zündmittel (12) ist.

5. Zündkapsel nach einem der vorherigen Ansprüche **dadurch gekennzeichnet, dass** die Beabstandung (A) beim Umspritzen der Zündkapsel mit den genormten Außenmaßen (19) mit Kunststoff ausgefüllt ist, als Puffer zwischen dem Grundkörper (7) und dem Anschlag (3).

6. Zündkapsel nach einem der vorherigen Ansprüche **dadurch gekennzeichnet, dass** die Beabstandung (A) 0 - 3 mm beträgt.

7. Zündkapsel nach einem der vorherigen Ansprüche **dadurch gekennzeichnet, dass** die erste Hülse (1) in verlängerter Ausführung (1a) ausgebildet ist mit einer Verstärkerladung (10).

8. Zündkapsel nach einem der vorherigen Ansprüche **dadurch gekennzeichnet, dass** die erste Hülse (1, 1a) mit einer Isolierkappe aus Kunststoff umhüllt ist.

9. Zündkapsel nach einem der vorherigen Ansprüche **dadurch gekennzeichnet, dass** die Sollbruchstellen (6, 6a) insbesondere an der Innenseite der Planfläche der zweiten Hülse (5) durch eine insbesondere bombierte Vertiefung (6) im Zentrum und durch sternförmig angeordnete Kerben (6a) an der Außenseite der Planfläche der zweiten Hülse (5) ausgebildet sind.

## Claims

1. Detonator for the gas generator of a passenger restraint system in an automotive vehicle, with
a first sleeve (1) produced in a thermoforming process with a form-fit base fold (2), the base of the first sleeve (1) having at least one opening which is circular (4, 4a) or is configured as an oblong hole (4b),
a second sleeve (5) which is closed on one side with predetermined breaking points (6, 6a),
a basic body (7) with a welded-on first electrical contact pin (9) and an insulated second electrical contact pin (11, 11a) which is embedded in insulation material (8) and is connected rigidly to the basic body (7) by means of a glow wire (13), wherein the assembled basic body (7) is inserted, after filling the second sleeve (5) with detonating agent (12), into the second sleeve (5) spaced (A) from its open end, and the second sleeve (5) is sealed gas-tight with a circumferential first weld seam (14), wherein the second sleeve (5) being inserted into the first sleeve (1) against a limit stop (3) and is connected with the first sleeve (1) with a circumferential second weld seam (15),
or the assembled basic body (7) is inserted into the first sleeve (1) with a base fold (2) against a limit stop (3) and is connected with a circumferential first weld seam (14) with the first sleeve (1),
wherein the first sleeve (1) after filling with detonating agent (12) is sealed hermetically by the second sleeve (5) with predetermined breaking points (6, 6a), which is closed on one side, with a circumferential weld seam (15), with a covering (B) at least in the detonation area.

2. Detonator according to claim 1, **characterised in that** the contact pin (11a) is cranked and fitted in the centre of the basic body (7).

3. Detonator according to one of the preceding claims, **characterised in that** the insulating material (8) is glass, ceramic or plastic material.

4. Detonator according to one of the preceding claims, **characterised in that** the detonating agent (12) is a dry, liquid or flowable detonating agent (12).

5. Detonator according to one of the preceding claims, **characterised in that** the spacing (A) is filled with plastic material during injection moulding of the detonator with the standard external dimensions (19), as buffer between the basic body (7) and the limit stop (3).

6. Detonator according to one of the preceding claims, **characterised in that** the spacing (A) is 0 - 3 mm.

7. Detonator according to one of the preceding claims, **characterised in that** the first sleeve (1) is configured, in extended configuration (1a), with a booster charge (10).

8. Detonator according to one of the preceding claims, **characterised in that** the first sleeve (1, 1a) is surrounded by an insulation cap made of plastic material.

9. Detonator according to one of the preceding claims, **characterised in that** the predetermined breaking points (6, 6a) are configured, in particular on the inside of the planar face of the second sleeve (5), by an in particular chased depression (6) in the centre and by notches (6a) disposed in a star-shape, on the outside of the planar face of the second sleeve (5).

## Revendications

1. Amorce pour le générateur de gaz d'un système de retenue de passagers dans un véhicule à moteur, avec
un premier manchon (1) réalisé par emboutissage, avec un soufflet de fond (2) de forme complémentaire, le fond du premier manchon (1) comprenant au moins un perçage qui présente une forme circulaire (4, 4a) ou est réalisé sous la forme d'un trou oblong (4b),
un deuxième manchon (5), fermé d'un côté, avec des points de rupture théoriques (6, 6a),
un corps de base (7), avec une première broche de contact électrique (9) soudée et une deuxième broche de contact électrique (11, 11a) isolée intégrée dans un matériau isolant (8), qui est relié fermement avec le corps de base (7) au moyen d'un filament (13),
le corps de base (7) équipé étant inséré, après le remplissage du deuxième manchon (5) avec un produit d'allumage (12), dans le deuxième manchon (5), à une certaine distance (A) de l'extrémité ouverte, et le deuxième manchon (5) étant fermé de manière étanche aux gaz avec un premier cordon de soudure (14) circulaire, le deuxième manchon (5) étant inséré dans le premier manchon (1) contre une butée (3) et relié avec le premier manchon (1) à l'aide d'un deuxième cordon de soudure (15) circulaire,
ou le corps de base (7) équipé étant inséré dans le premier manchon (1) avec soufflet de fond (2) contre une butée (3) et relié à l'aide d'un premier cordon de soudure (14) circulaire avec le premier manchon (1),
le premier manchon (1) étant fermé de manière hermétique, après le remplissage avec le produit d'allumage (12), par le deuxième manchon (5) fermé d'un côté, avec des points de rupture théoriques (6, 6a), à l'aide d'un deuxième cordon de soudure (15) circulaire, avec un recouvrement (B) au moins dans la zone de détonation.

2. Amorce selon la revendication 1, **caractérisée en ce que** la deuxième broche de contact (11a) est coudée et est placée au centre du corps de base (7).

3. Amorce selon l'une des revendications précédentes, **caractérisée en ce que** le matériau isolant (8) est du verre, de la céramique ou une matière plastique.

4. Amorce selon l'une des revendications précédentes, **caractérisée en ce que** le produit d'allumage (12) est un produit d'allumage (12) sec, liquide ou fluide.

5. Amorce selon l'une des revendications précédentes, **caractérisée en ce que** l'écartement (A) lors du surmoulage de l'amorce avec les dimensions externes (19) normalisées est rempli de matière plastique, afin d'obtenir un tampon entre le corps de base (7) et la butée (3).

6. Amorce selon l'une des revendications précédentes, **caractérisée en ce que** l'écartement (A) est de 0 à 3 mm.

7. Amorce selon l'une des revendications précédentes, **caractérisée en ce que** le premier manchon (1) est réalisé en version allongée (1a) avec une charge d'amplification (10).

8. Amorce selon l'une des revendications précédentes, **caractérisée en ce que** le premier manchon (1, 1a) est enveloppé d'un capuchon d'isolation en matière plastique.

9. Amorce selon l'une des revendications précédentes, **caractérisée en ce que** les points de rupture théoriques (6, 6a) sont réalisés, plus particulièrement sur le côté intérieur de la surface plane du deuxième manchon (5), à l'aide d'une cavité (6), plus particulièrement bombée, au centre et à l'aide d'encoches (6a) disposées en étoile sur le côté extérieur de la surface plane du deuxième manchon (5).
